# EUROPÄISCHE PATENTSCHRIFT

(11) **EP 1 775 227 B1**
(45) Veröffentlichungstag und Bekanntmachung des Hinweises auf die Patenterteilung: **18.06.2008**
(21) Anmeldenummer: 06020923.6
(22) Anmeldetag: 05.10.2006
(51) Int. Cl.: B65D 19/12

(54) **Transportcontainer**
Transport container
Conteneur de transport

(30) Priorität: 11.10.2005 DE 202005016085 U
(43) Veröffentlichungstag der Anmeldung: 18.04.2007
(73) Patentinhaber: Wanzl Metallwarenfabrik GmbH, 89336 Leipheim (DE)
(72) Erfinder: Wanninger, Lothar, 87719 Mindelheim (DE)

(56) Entgegenhaltungen:
- CH-A- 525 130
- DE-U- 7 526 812
- GB-A- 2 338 770
- US-A- 5 499 885

## Beschreibung

Die Erfindung betrifft einen von Hand bewegbaren Transportcontainer mit den Merkmalen im Oberbegriff des Hauptanspruchs.

Solche Transportcontainer, wie z.B. in der deutschen Gebrauchsmusterschrift 7526812 beschrieben, finden überwiegend in Lagern Verwendung. Sie werden insbesondere zum Transport von Waren eingesetzt. Es kommt vor, dass Waren auch längere Zeit in einem solchen Transportcontainer liegen bleiben. Übliche Transportcontainer sind daher neben vier Seitenwänden auch mit einem Deckel versehen. Die Seitenwände sind mittels Befestigungselementen verbunden. Auch zwischen den Seitenwänden und dem Deckel des Transportcontainers sind Befestigungselemente vorgesehen. Die Anzahl kann variieren, üblicherweise finden jeweils zwei Befestigungselemente pro zu verbindendem Bauteil Anwendung. Es ist jedoch vorgekommen, dass Transportcontainer von Unbefugten geöffnet wurden. Dies ist dadurch möglich, da bisherige Befestigungselemente einteilig ausgeführt und an den Rahmen der zu verbindenden Seitenteile mittels einer Schraube befestigt worden sind.

Die Aufgabe der Erfindung besteht darin, ein verbessertes Befestigungselement aufzuzeigen.

Die Erfindung löst die Aufgabe mit den Merkmalen im Hauptanspruch.

Beide Befestigungsteilelemente werden an einem ihrer Enden zusammengesetzt. Jedes Befestigungsteilelement weist Vorsprünge und Ausnehmungen auf, die passgenau ineinander greifen. Die Vorsprünge weisen jeweils Bohrungen auf, durch die ein Sicherungselement eingebracht wird.

Nach Befestigung an beiden Rahmenteilen klappt man beide Befestigungsteilelemente zusammen und bringt ein weiteres Sicherungselement ein. Dadurch lässt sich das Befestigungselement nur mittels eines Sonderwerkzeuges öffnen. Ein unerlaubtes Öffnen kann somit unterbunden werden.

Weitere Vorteile sind der Beschreibung zu entnehmen.

Die Erfindung wird anhand von Ausführungsbeispielen näher erläutert. Es zeigt
Fig. 1 und Fig. 2 ein Befestigungselement, das an zwei Rahmenteilen angebracht ist;
Fig. 3 dasselbe Befestigungselement ohne Rahmenteile in geschlossenem Zustand;
Fig. 4 dasselbe Befestigungselement in geöffnetem Zustand;
Fig. 5 ein Befestigungsteilelement sowie

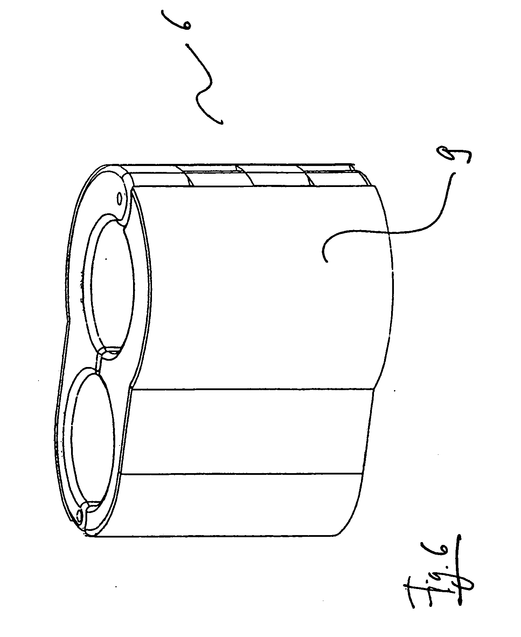

Fig. 6 ein Befestigungselement mit einer Wandung.

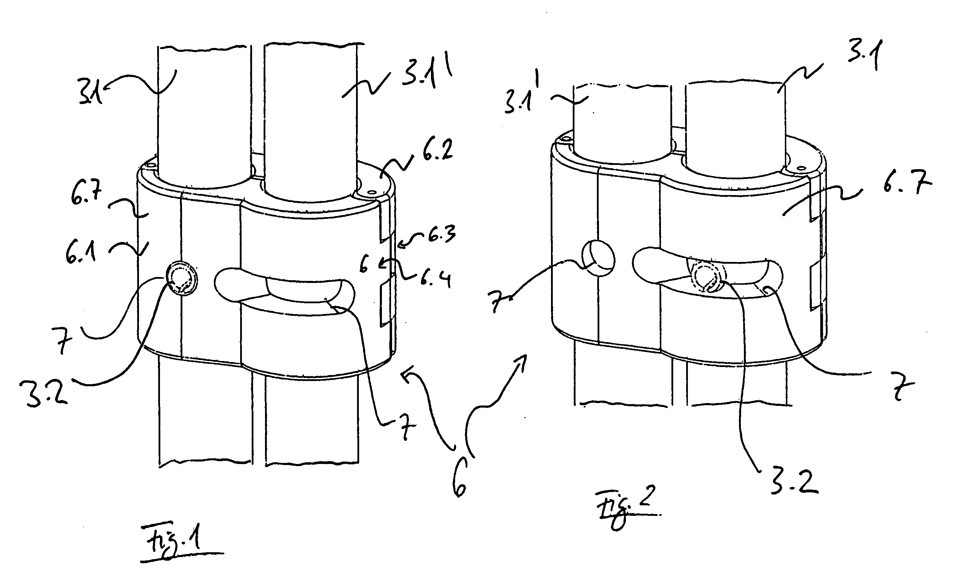

Das Befestigungselement 6 verbindet zwei Rahmen 3.1, 3.1' von zwei nicht näher dargestellten Seitenteilen 3 eines Transportcontainers 1 miteinander. Die Figuren 1 und 2 zeigen ein Befestigungselement 6, das ein erstes und ein zweites Befestigungsteilelement 6.1 und 6.2 aufweist. Durch diese Zweiteilung ist eine einfache Montage des Befestigungselementes 6 am Transportcontainer 1 möglich.

Auch können der Rahmen 3.1 eines Seitenteiles 3 mit einem Rahmen 5.1 eines Deckels 5 mittels eines solchen Befestigungselementes 6 verbunden werden. Für die Verbindung der zwei Bauteile findet weiterhin ein Verbindungsbolzen 3.2 bzw. 6.2 Verwendung.

Dieser Verbindungsbolzen 3.2 ist in den Figuren 1 und 2 dargestellt. In Fig. 1 trägt dieser Verbindungsbolzen 3.2, in Form eines Schwerspannstiftes, das Befestigungselement 6. Aufgrund der kreisförmigen Aussparung 7 ist eine Drehung des Rahmens 3.1' um 180° möglich. In Fig. 2 ist eine weitere Variante dargestellt. Das dargestellte Befestigungselement 6 weist eine weitere Aussparung 7 auf, die oval ausgeführt ist. Der Rahmen 3.1' ist in diesem Fall dann um 270° drehbar. Durch die beiden verschiedenen Aussparungen können beide Funktionen mittels eines Bauteiles gelöst werden.

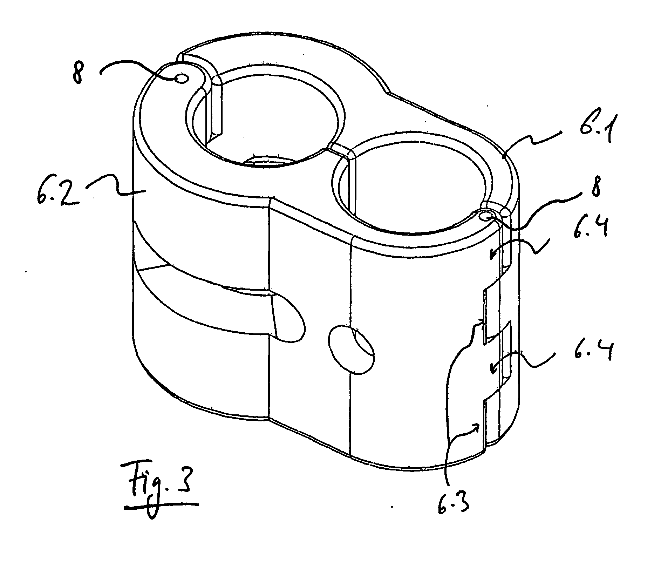

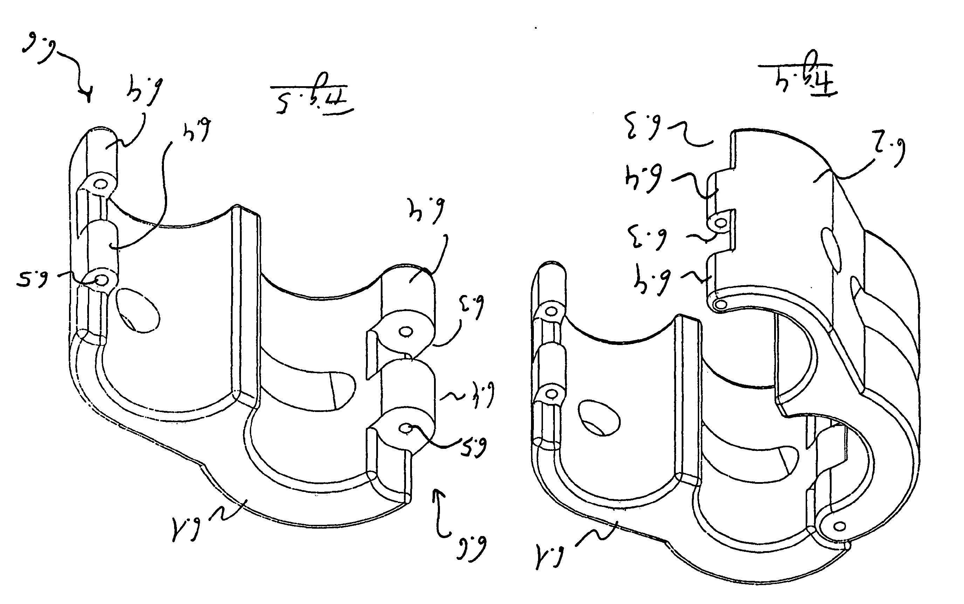

Beide Befestigungsteilelemente 6.1 und 6.2 weisen Ausnehmungen 6.3 und Vorsprünge 6.4 auf. Diese sind derart angeordnet, dass beide Befestigungsteilelemente 6.1 und 6.2 passgenau ineinander greifen. Weist das Befestigungsteilelement 6.1 einen Vorsprung 6.4 auf, so ist auf der gegenüberliegenden Seite des Befestigungsteilelementes 6.2 eine Ausnehmung 6.3 vorgesehen. Dies ist insbesondere in den Figuren 3 und 4 genau dargestellt. Beide äußere Enden 6.6 sind entsprechend mit Ausnehmungen 6.3 und Vorsprüngen 6.4 ausgestattet. Dies ist in Fig. 5 dargestellt. Die Anzahl an Ausnehmungen 6.3 und Vorsprüngen 6.4 ist beliebig und bleibt dem Fachmann überlassen. Als angemessen hat sich pro Seite eine Anzahl von zwei Ausnehmungen 6.3 und zwei Vorsprüngen 6.4 erwiesen. Sämtliche Vorsprünge 6.4 sind abgerundet. Eine Verletzungsgefahr kann dadurch unterbunden werden.

Sämtliche Vorsprünge 6.4 weisen eine Bohrung 6.5 auf. Durch die abgerundete Form sind die Vorsprünge 6.4 einfacher mit den Bohrungen 6.5 zu versehen.

Die Bohrungen 6.5 in den Vorsprüngen 6.4 sind jeweils übereinander und vertikal entlang eines jeden Vorsprungs 6.4 angeordnet. Sie dienen zur Aufnahme eines Sicherungsmittels 8, das vorzugsweise in Form eines Stiftes ausgeführt ist. Der Durchmesser ist angemessen zur Größe des Vorsprunges 6.4 auszuführen und weist vorzugsweise einen runden Querschnitt auf. Das Sicherungsmittel 8 ist ein Bauteil, das vorzugsweise aus einem Stahl hergestellt ist und mittels eines Sonderwerkzeuges eingebracht und bei Bedarf mit diesem auch wieder herausgeschlagen werden kann. Eine Diebstahlsicherheit ist dadurch gegeben. Weiterhin können die Sicherungsmittel 8 auch direkt vor Ort angebracht werden. Auch die Vormontage an einem der äußeren Enden 6.6 ist möglich.

Jedes Befestigungsteilelement 6.1, 6.2 weist Aussparungen 7 auf. Diese sind jeweils in der Wand 6.7 jedes Teilelementes 6.1, 6.2 vorgesehen und vorzugsweise spiegelbildlich zu einander angeordnet.

Vorzugsweise ist jedes Befestigungsteilelement 6.1, 6.2 mit einer Wandung 9 versehen. Dadurch ist ein bündiger Abschluss gegeben. Ein Verschmutzen kann unterbunden werden. Die Wandung 9 bietet einen zusätzlichen Schutz des Verbindungsbolzens 3.2 und verdeckt die Ausnehmungen 6.3 und Vorsprünge 6.4.

Insgesamt weist das Befestigungselement 6 eine kompakte Bauweise auf. Durch den Einsatz der Ausnehmungen 6.3 und der Vorsprünge 6.4 kann weiterhin ein Überstand vermieden werden.

Das Befestigungselement 6 ist vorzugsweise aus einem Kunststoff hefestellt. Die möglichen Verfahren hierfür bleiben dem Fachmann überlassen.

### Bezugszeichenliste

- 1: Transportcontainer
- 2: Fahrgestell
- 3: Seitenteile
- 3.1: Rahmen des Seitenteiles
- 3.1': weiterer Rahmen des Seitenteiles
- 3.2: Verbindungsbolzen
- 4: Etage
- 5: Deckel
- 5.1: Rahmen des Deckels
- 6: Befestigungselement
- 6.1: erstes Befestigungsteilelement/Teilelement
- 6.2: zweites Befestigungsteilelement/Teilelement
- 6.3: Ausnehmungen
- 6.4: Vorsprünge
- 6.5: Bohrungen
- 6.6: äußeres Ende
- 6.7: Wand
- 7: Aussparungen
- 8: Sicherungsmittel
- 9: Wandung

## Patentansprüche

1. Von Hand bewegbarer Transportcontainer (1) mit einem Fahrgestell (2), mit am Fahrgestell (2) angeordneten Seitenteilen (3), üblicherweise mit Etagen (4), die lösbar an den Seitenteilen (3) angeordnet sind und vorzugsweise mit einem Deckel (5), wobei Seitenteile (3) und Deckel (5) jeweils in einem Rahmen (3.1, 5.1) gefasst sind, und wobei Befestigungselemente (6) vorgesehen sind, die die Seitenteile (3) und die Seitenteile mit dem Deckel (5) gegeneinander sichern und wobei jedes Befestigungselement (6) Aussparungen (7) für die Aufnahme der Rahmen (3.1, 5.1) aufweist, **dadurch gekennzeichnet, dass** jedes Befestigungselement (6) zweiteilig gestaltet ist und mit diebstahlsicheren Sicherungsmitteln (8) zusammengefügt ist.

2. Von Hand bewegbarer Transportcontainer nach Anspruch 1, **dadurch gekennzeichnet, dass** jedes Befestigungselement (6) aus einem ersten Befestigungsteilelement (6.1) und einem zweiten Befestigungsteilelement (6.2) gebildet ist, wobei beide Teilelemente (6.1, 6.2) passgenau ineinander greifen.

3. Von Hand bewegbarer Transportcontainer nach Anspruch 2, **dadurch gekennzeichnet, dass** jedes Teilelement (6.1, 6.2) Ausnehmungen (6.3) aufweist.

4. Von Hand bewegbarer Transportcontainer nach einem der Ansprüche 2 oder 3, **dadurch gekennzeichnet, dass** jedes Teilelement (6.1, 6.2) Vorsprünge (6.4) aufweist.

5. Von Hand bewegbarer Transportcontainer nach einem der Ansprüche 2 bis 4, **dadurch gekennzeichnet, dass** die Vorsprünge (6.4) des ersten Teilelementes (6.1) in den Ausnehmungen (6.3) des zweiten Teilelementes (6.2) angeordnet sind.

6. Von Hand bewegbarer Transportcontainer nach einem der Ansprüche 2 bis 5, **dadurch gekennzeichnet, dass** die Vorsprünge (6.4) des zweiten Teilelementes (6.2) in den Ausnehmungen (6.3) des ersten Teilelementes (6.1) angeordnet sind.

7. Von Hand bewegbarer Transportcontainer nach einem der Ansprüche 2 bis 6, **dadurch gekennzeichnet, dass** Vorsprünge (6.4) und Ausnehmungen (6.3) an beiden äußeren Enden (6.6) jedes Teilelementes (6.1), (6.2) vorgesehen sind.

8. Von Hand bewegbarer Transportcontainer nach einem der Ansprüche 4 bis 7, **dadurch gekennzeichnet, dass** sämtliche Vorsprünge (6.4) Bohrungen (6.5) aufweisen.

9. Von Hand bewegbarer Transportcontainer nach einem der Ansprüche 1 bis 8, **dadurch gekennzeichnet, dass** jedes Befestigungselement (6) Aussparungen (7) aufweist.

10. Von Hand bewegbarer Transportcontainer nach einem der Ansprüche 1 bis 9, **dadurch gekennzeichnet, dass** jedes Befestigungselement (6) mit einer äußeren Wandung (9) versehen ist.

## Claims

1. A manually movable transport container (1) with a wheel frame (2), with side parts (3) arranged on the wheel frame (2), usually with shelves (4) which are detachably arranged on the side parts (3) and preferably with a cover (5), wherein the side parts (3) and the cover (5) are each mounted in a frame (3.1, 5.1), and wherein fastening members (6) are provided which secure the side parts (3) in relation to one another and secure the side parts in relation to the cover (5) and wherein each fastening member (6) has openings (7) for receiving the frames (3.1, 5.1), **characterised in that** each fastening member (6) is formed in two parts and is assembled using theftproof securing means (8).

2. A manually movable transport container according to claim 1, **characterised in that** each fastening member (6) is formed from a first fastening sub-member (6.1) and a second fastening sub-member (6.2), wherein the two sub-members (6.1, 6.2) interlock with a precise fit.

3. A manually movable transport container according to claim 2, **characterised in that** each sub-member (6.1, 6.2) has recesses (6.3).

4. A manually movable transport container according to either claim 2 or claim 3, **characterised in that** each sub-member (6.1, 6.2) has projections (6.4).

5. A manually movable transport container according to any one of claims 2 to 4, **characterised in that** the projections (6.4) of the first sub-member (6.1) are arranged in the recesses (6.3) of the second sub-member (6.2).

6. A manually movable transport container according to any one of claims 2 to 5, **characterised in that** the projections (6.4) of the second sub-member (6.2) are arranged in the recesses (6.3) of the first sub-member (6.1).

7. A manually movable transport container according to any one of claims 2 to 6, **characterised in that** projections (6.4) and recesses (6.3) are provided on both outer ends (6.6) of each sub-member (6.1), (6.2).

8. A manually movable transport container according to any one of claims 4 to 7, **characterised in that** all projections (6.4) have bores (6.5).

9. A manually movable transport container according to any one of claims 1 to 8, **characterised in that** each fastening member (6) has openings (7).

10. A manually movable transport container according to any one of claims 1 to 9, **characterised in that** each fastening member (6) is provided with an outer wall (9).

## Revendications

1. Conteneur de transport (1) mobile manuellement, comprenant un châssis de roulement (2) ; des parties latérales (3) disposées sur ledit châssis de roulement (2) et comportant, habituellement, des gradins (4) agencés amoviblement sur lesdites parties latérales (3) ; et, de préférence, un couvercle (5), sachant que les parties latérales (3) et le couvercle (5) sont respectivement regroupés en un cadre (3.1, 5.1), et sachant qu'il est prévu des éléments de fixation (6) assurant le verrouillage mutuel des parties latérales (3), et desdites parties latérales avec ledit couvercle (5), chaque élément de fixation (6) étant muni de boutonnières (7) destinées à recevoir les cadres (3.1, 5.1), **caractérisé par le fait que** chaque élément de fixation (6) est réalisé en deux parties dont l'assemblage est assuré par des moyens d'arrêt (8) à sûreté antivol.

2. Conteneur de transport mobile manuellement, selon la revendication 1, **caractérisé par le fait que** chaque élément de fixation (6) est composé d'un premier élément partiel de fixation (6.1) et d'un second élément partiel de fixation (6.2), les deux éléments partiels (6.1, 6.2) s'interpénétrant avec adaptation précise.

3. Conteneur de transport mobile manuellement, selon la revendication 2, **caractérisé par le fait que** chaque élément partiel (6.1, 6.2) comporte des évidements (6.3).

4. Conteneur de transport mobile manuellement, selon l'une des revendications 2 ou 3, **caractérisé par le fait que** chaque élément partiel (6.1, 6.2) possède des protubérances (6.4).

5. Conteneur de transport mobile manuellement, selon l'une des revendications 2 à 4, **caractérisé par le fait que** les protubérances (6.4) du premier élément partiel (6.1) sont logées dans les évidements (6.3) du second élément partiel (6.2).

6. Conteneur de transport mobile manuellement, selon l'une des revendications 2 à 5, **caractérisé par le fait que** les protubérances (6.4) du second élément partiel (6.2) sont logées dans les évidements (6.3) du premier élément partiel (6.1).

7. Conteneur de transport mobile manuellement, selon l'une des revendications 2 à 6, **caractérisé par le fait que** des protubérances (6.4) et des évidements (6.3) sont prévus aux deux extrémités extérieures (6.6) de chaque élément partiel (6.1, 6.2).

8. Conteneur de transport mobile manuellement, selon l'une des revendications 4 à 7, **caractérisé par le fait que** toutes les protubérances (6.4) présentent des perçages (6.5).

9. Conteneur de transport mobile manuellement, selon l'une des revendications 1 à 8, **caractérisé par le fait que** chaque élément de fixation (6) comporte des boutonnières (7).

10. Conteneur de transport mobile manuellement, selon l'une des revendications 1 à 9, **caractérisé par le fait que** chaque élément de fixation (6) est pourvu d'une paroi extérieure d'enveloppement (9).
